# EUROPÄISCHE PATENTSCHRIFT

(11) **EP 0 354 446 B1**
(45) Veröffentlichungstag und Bekanntmachung des Hinweises auf die Patenterteilung: **10.03.1993**
(21) Anmeldenummer: 89114175.6
(22) Anmeldetag: 01.08.1989
(51) Int. Cl.: F16B 37/00

(54) **Innengewinde-Befestigungselement**
Fixing device with an internal thread
Elément de fixation avec taraudage interne

(30) Priorität: 10.08.1988 US 230589
(43) Veröffentlichungstag der Anmeldung: 14.02.1990
(73) Patentinhaber: BUELL INDUSTRIES, INC., Waterbury Connecticut 06723 (US)
(72) Erfinder: Peterson, Francis C., Woodbury Connecticut 06798 (US)
(74) Vertreter: Knoblauch, Ulrich, Dr.-Ing.

(56) Entgegenhaltungen:
- BE-A- 761 979
- FR-A- 2 219 699
- FR-A- 2 264 215
- FR-A- 2 266 558
- NL-C- 90 717

## Beschreibung

Die Erfindung bezieht sich auf ein Innengewinde-Befestigungselement mit einem Körper, der eine mit Innengewinde versehene Bohrung aufweist, die wenigstens ein offenes Ende zur Aufnahme eines Außengewinde-Befestigungselements aufweist.

Außengewinde-Befestigungselemente, z.B. Maschinenschrauben, Bolzen und Stifte, werden gewöhnlich zusammen mit entsprechend bemessenen Innengewinde-Befestigungselementen, z.B. Muttern oder mit Innengewinde versehenen Bohrungen, verwendet. Wenn diese Befestigungsmittel miteinander in Eingriff gebracht werden sollen, muß sorgfältig darauf geachtet werden, daß sie genau miteinander fluchten, da andernfalls eine Gewindeüberkreuzung auftreten kann, wenn sie zusammengeschraubt werden. Eine Gewindeüberkreuzung kann zu einer Beschädigung des Gewindes sowohl des einen als auch des anderen Befestigungselements und dazu führen, daß sich die Befestigungselemente festfressen. Wenn sich eine solche Befestigungselemente-Kombination festgefressen hat, läßt sie sich nicht weiter festziehen, so daß sich eine unsichere Befestigung und eine Vielzahl möglicher Unfälle ergibt, z.B. eine Verletzung von Personen oder Beschädigung von Einrichtungen. Darüber hinaus ist eine festgefressene Befestigungselemente-Kombination schwierig zu lösen, und die Gewinde der Befestigungselemente werden beschädigt, wenn die Befestigungselemente getrennt werden.

Aus der FR-A-2 264 215 und der FR-A-2 219 699 sind Gewindereinigungsmuttern bekannt. Diese sind so ausgebildet, daß sie auf Schraubbolzen passen, deren Gewinde Farbe oder dergleichen aufweist, die das Einführen der Schraube in eine Gewindebohrung behindert. Zu diesem Zweck sind in der Gewindereinigungsmutter wenigstens zwei gewindefreie Aussparungen so ausgebildet, daß an diese Aussparungen angrenzende Gewindeabschnitte scharfe Kanten bilden, die in die Farbe einschneiden und sie vom Gewinde des Schraubbolzens entfernen können.

Aus der FR-A-2 266 558 ist es bekannt, in einer Bohrung, und zwar in einem axialen Abstand von ihrem der Einführung einer Schraube mit Schneid-Gewinde dienenden Ende, in einer schräg zur Bohrungsachse liegenden Ebene einen Bund auszubilden und diesen mit einer Unterbrechung zu versehen, um eine möglichst koaxiale Einführung der Schraube zu erleichtern, die sich selbst beim Hineindrehen in die Bohrung ein vollständiges Gewinde in die Bohrung schneidet, dabei jedoch den Bund entfernt.

Der Erfindung liegt die Aufgabe zugrunde, ein Innengewinde-Befestigungselement der gattungsgemäßen Art anzugeben, das eine Gewindeüberkreuzung und damit verbundene Probleme verhindert. Insbesondere soll dieses Innengewinde-Befestigungselement sicherstellen, daß beim Einschrauben eines Außengewinde-Befestigungselements in das Innengewinde-Befestigungselement die Gewinde beider Elemente miteinander in Phase sind, so daß sich die Befestigungselemente ohne Gewindeüberkreuzung zusammenschrauben lassen.

Erfindungsgemäß ist diese Aufgabe dadurch gelöst, daß in dem einen offenen Ende, an dieses angrenzend ein einziges gewindefreies Lippensegment ausgebildet ist; daß dieses offene Ende eine ovale Form hat, so daß das gewindefreie Lippensegment gegenüber der Mittelachse der Bohrung versetzt ist und sich radial nach außen von der Bohrung weg erstreckt; daß wenigstens eine (erste) Partialwindung des Innengewindes in der Bohrung gegenüber dem Lippensegment ausgebildet ist und daß die Umfangslänge der Partialwindung etwa 20 bis etwa 70, vorzugsweise etwa 25 bis etwa 50 Prozent, des Durchmessers der Bohrung beträgt.

Vorzugsweise ist das Lippensegment radial nach außen von der Mittelachse der Bohrung weggeneigt. Der Neigungswinkel kann etwa 2 bis etwa 10°, vorzugsweise etwa 5° betragen.

An dem einen Ende der Bohrung kann ein Mund ausgebildet sein, der das Lippensegment aufweist. Bei einer durchgehenden Bohrung kann der Mund auch an beiden Enden ausgebildet sein.

Der Mund ist vorzugsweise nicht kreisförmig und enthält ein Partialwindungssegment sowie das gewindefreie Lippensegment. Das Partialwindungssegment grenzt an das Innengewinde der Bohrung an und hat wenigstens eine Partialwindung mit der gleichen Teilung wie das Innengewinde der Bohrung. Vorzugsweise ist eine zweite Partialwindung in dem Partialwindungssegment des Bohrungsmundes ausgebildet, die in der Nähe der Öffnung des Bohrungsmundes liegt und eine Umfangslänge von etwa 15 bis etwa 65 % des Durchmessers der Bohrung aufweist, während die erste Partialwindung in der Nähe der zweiten Partialwindung liegt.

Die Erfindung und ihre Weiterbildung werden nachstehend anhand der Zeichnung eines bevorzugten Ausführungsbeispiels näher beschrieben. Es zeigen:
Fig. 1 eine Unteransicht eines erfindungsgemäßen Innengewinde-Befestigungselements,
Fig. 2 einen Querschnitt des Befestigungselements nach Fig. 1,
Fig. 3 eine Draufsicht auf das Befestigungselement nach Fig. 1 und
Fig. 4 eine perspektivische Ansicht des Befestigungselements nach Fig. 1.

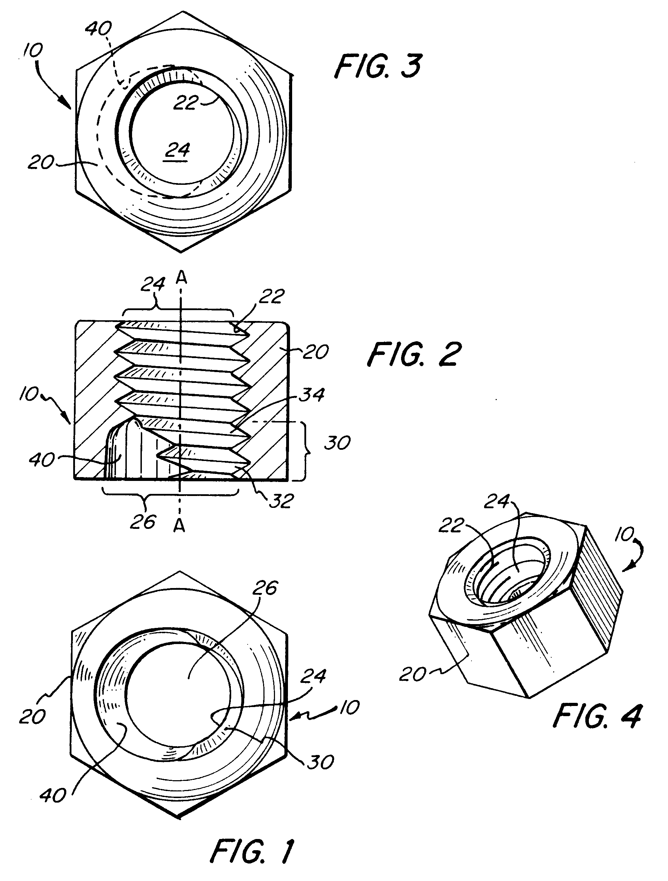

Bei dem in den Fig. 1 bis 4 dargestellten Innengewinde-Befestigungselement handelt es sich um eine Mutter. Die Erfindung ist jedoch auch bei einem anderen Innengewinde- Befestigungselement anwendbar, das eine an wenigstens einem Ende offene Bohrung mit Innengewinde aufweist.

Ein Innengewinde-Befestigungselement, z.B. die in den Fig. 1 bis 4 dargestellte Mutter 10, hat einen Körper 20 mit einer Bohrung 22. Die Bohrung 22 kann den Körper 20 vollständig durchsetzen, wie es bei der dargestellten Mutter der Fall ist, oder sich nur durch einen Teil des Körpers 20 erstrecken. Die Bohrung hat wenigstens ein offenes Ende 24 zur Aufnahme eines Außengewinde-Befestigungselements, z.B. einer Schraube, eines Gewindebolzens oder Gewindestiftes. In wenigstens einem der offenen Enden 24 ist ein Mund 26 vorgesehen, der ein Partialwindungssegment 30 und ein Lippensegment 40 aufweist. Vorzugsweise ist der Mund 26 nicht kreisförmig, wie beispielsweise die weitgehend ovale Form, die in den Fig. 1 und 2 dargestellt ist. Es kann jedoch auch eine kreisrunde Mundform und eine Vielzahl nicht-kreisrunder Mundformen im Zusammenhang mit der vorliegenden Erfindung vorgesehen sein.

Das Partialwindungssegment 30 des Mundes 26 grenzt an die Bohrung 22 an und ist innen mit einer Partialwindung versehen, deren Gewindeteilung gleich der der Bohrung ist. In dem Partialwindungssegment 30 sind vorzugsweise zwei Partialwindungen 32 und 34 vorgesehen. Die Partialwindung 32 liegt in der Nähe des offenen Endes der Bohrung 22 und hat eine Umfangslänge, die etwa 15 bis etwa 65 %, vorzugsweise etwa 15 bis etwa 60 %, des Durchmessers der Bohrung 22 beträgt. Die Partialwindung 34 liegt in der Nähe der ersten Partialwindung und hat eine Umfangslänge von etwa 20 bis 70 % des Durchmessers der Bohrung 22. Vorzugsweise hat die Partialwindung 32 eine Umfangslänge von etwa 25 bis etwa 50 %, vorzugsweise etwa 25 bis etwa 40 %, des Durchmessers der Bohrung 22 und die Partialwindung 34 eine Umfangslänge von etwa 30 bis etwa 50 % des Durchmessers der Bohrung 22.

Das Lippensegment 40 ist in dem Mund 26 gegenüber dem Partialwindungssegment 30 ausgebildet. Das Lippensegment 40 ist gewindefrei. Wie Fig. 1 zeigt, hat das Lippensegment 40 vorzugsweise eine gekrümmte Form; es liegen jedoch auch andere Formen im Rahmen der Erfindung, sofern keine Gewinde darin ausgebildet sind.

Vorzugsweise ist das Lippensegment 40 radial nach außen von der Mittelachse A-A der Bohrung 22 weg geneigt, wie es in Fig. 2 dargestellt ist. Der Neigungswinkel liegt zwischen etwa 2 bis etwa 10° gegenüber der Mittelachse A-A der Bohrung 22, die in Fig. 2 dargestellt ist. Vorzugsweise beträgt der Neigungswinkel etwa 5° gegenüber der Mittelachse A-A der Bohrung 22.

Das erfindungsgemäße Innengewinde-Befestigungselement kann auf verschiedenste Art hergestellt sein. So kann ein Körper, z.B. eine Mutter, im Guß- oder Extrusionsverfahren auf an sich bekannte Weise geformt werden. Das zur Formung des Körpers verwendete Formwerkzeug oder Gesenk kann so geformt sein, daß das Lippensegment gleichzeitig mit der Formgebung des Körpers geformt wird. Alternativ kann das Lippensegment in dem Mund der Bohrung ausgebildet werden, nachdem der Körper hergestellt worden ist, und zwar durch Anbohren des Körpers an einem gegenüber der Mittelachse der Bohrung versetzten Punkt oder durch Anwendung eines Lochungs- oder Schlagwerkzeugs an diesem Punkt. Die Bohrung kann dann durch Gewindeschneiden mit Gewinde versehen werden. Wo sich das Lippensegment radial nach außen von der Mittelachse der Bohrung weg erstreckt, wird kein Gewinde im Lippensegment ausgebildet. Alternativ kann das Lippensegment durch Bohren oder Lochen ausgebildet werden, nachdem das Gewinde in der Bohrung ausgebildet worden ist.

Das erfindungsgemäße Innengewinde-Befestigungselement verhindert durch die Ausbildung des gewindefreien Lippensegments 40 eine Gewindeüberkreuzung, da das Lippensegment ein Außengewinde-Befestigungselement beim Einführen in das Innengewinde-Befestigungselement führt und bewirkt, daß das Gewinde des Außengewinde-Befestigungselements neben wenigstens der einen Partialwindung positioniert wird, so daß das Gewinde des Außengewinde-Befestigungselements mit dem Gewinde des Innengewinde-Befestigungselements in Phase ist. Die Befestigungselemente können dann miteinander verschraubt werden. Die Erfindung bietet daher den Vorteil gegenüber dem Stand der Technik, daß sie ein sehr sorgfältiges Einführen und Ausrichten der Gewinde von Innengewinde- und Außengewinde-Befestigungselement vor deren Verschraubung mittels Maschinenwerkzeugen erübrigt und die Probleme einer Gewindeüberkreuzung, die selbst bei sorgfältigem Zusammenstecken herkömmlicher Befestigungselemente auftreten Können, auf ein Minimum reduziert.

## Patentansprüche

1. Innengewinde-Befestigungselement (10) mit einem Körper (20), der eine mit Innengewinde versehene Bohrung (22) aufweist, die wenigstens ein offenes Ende (24) zur Aufnahme eines Außengewinde-Befestigungselements aufweist, **dadurch gekennzeichnet**, daß in dem einen offenen Ende (24) an dieses angrenzend ein einziges gewindefreies Lippensegment (40) ausgebildet ist; daß dieses offene Ende (24) eine ovale Form hat, so daß das gewindefreie Lippensegment (40) gegenüber der Mittelachse (A-A) der Bohrung (22) versetzt ist und sich radial nach außen von der Bohrung (22) weg erstreckt; daß wenigstens eine Partialwindung (34) des Innengewindes in der Bohrung (22) gegenüber dem Lippensegment (40) ausgebildet ist und daß die Umfangslänge der Partialwindung (34) etwa 20 bis etwa 70, vorzugsweise etwa 25 bis etwa 50 Prozent, des Durchmessers der Bohrung (22) beträgt.

2. Innengewinde-Befestigungselement nach Anspruch 1, dadurch gekennzeichnet, daß das Lippensegment (40) radial nach außen von der Mittelachse (A-A) der Bohrung (22) weg geneigt ist.

3. Innengewinde-Befestigungselement nach Anspruch 2, dadurch gekennzeichnet, daß der Neigungswinkel etwa 2 bis etwa 10, vorzugsweise etwa 5° beträgt.

4. Innengewinde-Befestigungselement nach einem der Ansprüche 1 bis 3, dadurch gekennzeichnet, daß an dem einen offenen Ende der Bohrung (22) ein Mund (26) ausgebildet ist, der das Lippensegment (40) aufweist.

5. Innengewinde-Befestigungselement nach einem der Ansprüche 1 bis 4, dadurch gekennzeichnet, daß eine zweite Partialwindung (32) vorgesehen ist, die in der Nähe des offenen Endes (24) der Bohrung (22) liegt und eine Umfangslänge von etwa 15 bis etwa 65, vorzugsweise etwa 25 bis 40 Prozent des Durchmessers der Bohrung (22) aufweist, und die erste Partialwindung (34) in der Nähe der zweiten liegt.

6. Innengewinde-Befestigungselement nach einem der Ansprüche 1 bis 5, dadurch gekennzeichnet, daß der Körper (20) eine Mutter bildet.

## Claims

1. Female threaded fastening element (10) comprising a body (20) having a threaded bore (22) having at least one open end (24) for receiving a threaded male fastening element, characterized in that a single unthreaded lip segment (40) is formed in and adjoining said one open end (24); that this open end (24) is oval in shape, such that the unthreaded lip segment (40) is offset from the central axis (A-A) of the threaded bore (22) and extends radially outwardly from the threaded bore (22); that there is at least one partial thread (34) formed in the bore (22) opposite the lip segment (40) and that the circumferential length of the partial thread (34) is about 20 to about 70, preferably about 25 to about 50, percent of the diameter of the bore (22).

2. Female threaded fastening element in accordance with claim 1, characterized in that the lip segment (40) is tapered radially outwardly from the central axis (A-A) of the bore (22).

3. Female threaded fastening element in accordance with claim 2, characterized in that the tapering angle is about 2 to about 10, preferably about 5 degrees.

4. Female threaded fastening element in accordance with any of the claims 1 to 3, characterized in that on the one open end of the bore (22) is formed a mouth (26) comprising the lip segment (40).

5. Female threaded fastening element in accordance with any of the claims 1 to 4, characterized in that there is a second partial thread (32) which is located adjacent the open end (24) of the bore (22) and has a circumferential length equal to about 15 to about 65, preferably 25 to about 40, percent of the diameter of the bore (22), and the first partial thread (34) is adjacent the second.

6. Female threaded fastening element in accordance with any of the claims 1 to 5, characterized in that the body (20) provides a nut.

## Revendications

1. Elément de fixation à filetage interne (10) muni d'un corps (20) comportant un alésage (22) muni d'un filetage interne avec au moins une extrémité ouverte (24) pour recevoir un élément de fixation à filetage interne, caractérisé en ce que dans l'extrémité ouverte (24) contiguë à celui-ci est formé un segment à lèvres (40) unique sans filetage ; en ce que cette extrémité ouverte (24) a une forme ovale de sorte que le segment à lèvres (40) sans filetage est décalé par rapport à l'axe médian (A-A) de l'alésage (22) et s'étend radialement vers l'extérieur en s'éloignant de l'alésage (22) ; en ce qu'au moins une spire partielle (34) du filetage interne dans l'alésage (22) est formée en opposition au segment à lèvres (40) et en ce que la longueur périphérique de la spire partielle (34) représente environ 20 à environ 70, de préférence d'environ 25 à environ 50 % du diamètre de l'alésage (22).

2. Elément de fixation à filetage interne selon la revendication 1, caractérisé en ce que le segment à lèvres (40) est incliné radialement vers l'extérieur en s'éloignant de l'axe médian (A-A) de l'alésage (22).

3. Elément de fixation à filetage interne selon la revendication 2, caractérisé en ce que l'angle d'inclinaison correspond à environ 2 à environ 10, de préférence à environ 5°.

4. Elément de fixation à filetage interne selon l'une des revendications 1 à 3, caractérisé en ce que sur une extrémité ouverte de l'alésage (22) est formée une embouchure (26) qui comporte le segment à lèvres (40).

5. Elément de fixation à filetage interne selon l'une des revendications 1 à 4, caractérisé en ce qu'il est prévu une deuxième spire partielle (32) qui se situe à proximité de l'extrémité ouverte (24) de l'alésage (22) et représente une longueur périphérique d'environ 15 jusqu'à environ 65, de préférence d'environ 25 jusqu'à 40 % du diamètre de l'alésage (22), et en ce que la première spire partielle (34) se situe à proximité de la deuxième.

6. Elément de fixation à filetage interne selon l'une des revendications 1 à 5, caractérisé en ce que le corps (20) forme un écrou.
